# EUROPEAN PATENT APPLICATION

(11) **EP 4 656 428 A1**
(43) Date of publication of application: **03.12.2025**
(21) Application number: 25175741.5
(22) Date of filing: 12.05.2025
(51) Int. Cl.: B60K 1/04, B60K 1/00

(54) **BATTERY ELECTRIC VEHICLE**

(30) Priority: 27.05.2024 JP 2024085602
(71) Applicant: Toyota Jidosha Kabushiki Kaisha, Toyota-shi, Aichi-ken 471-8571 (JP)
(72) Inventor: ICHIKAWA, Akitaka, Toyota-shi, Aichi-ken 471-8571 (JP)
(74) Representative: Cabinet Beau de Loménie

(57) **Abstract**

A battery electric vehicle includes a battery (14), left and right front wheels (10), a driver's seat and a front passenger seat (13), a drive unit (20), and a power supply device (18). The power supply device supplies power from the outside to the battery and supplies power from the battery to various devices. The battery (14) includes an intermediate section (15) that is disposed between the driver's seat and the front passenger seat so as to extend from a front end to a rear end of a passenger compartment, and a front section (16) disposed forward of the intermediate section. The intermediate section and the front section each accommodate multiple battery cells. The drive unit (18) has a single-axial structure in which a speed reducer and a drive shaft are disposed on a rotation axis of a motor, and is disposed between the front wheels (10). The front section (16) is disposed rearward of the drive unit. The power supply device (18) is disposed above the front section (16).

## Description

### BACKGROUND

### 1. Field

The present disclosure relates to a battery electric vehicle.

### 2. Description of Related Art

Japanese Laid-Open Patent Publication No. 2023-520139 discloses a battery electric vehicle. In this battery electric vehicle, a battery is disposed between a driver's seat and a front passenger seat.

There is a demand for battery electric vehicles of the sports car type. To achieve proportions suitable for a sports car in a battery electric vehicle, it is desirable to reduce the height of a portion located forward of the driver's seat and the front passenger seat.

In order to extend the cruising distance of a battery electric vehicle, it is necessary to increase the capacity of the battery. Various devices included in the battery electric vehicle are mutually connected by harnesses. In a limited vehicle interior space, in order to ensure sufficient battery capacity and reduce harness routing length, there is room for design improvements in the layout.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a battery electric vehicle includes a battery, left and right front wheels configured to be driven by electricity stored in the battery, a passenger compartment, a driver's seat and a front passenger seat installed in the passenger compartment, a drive unit including a motor and a speed reducer configured to transmit rotation generated by the motor to a drive shaft, and a power supply device. The power supply device is configured to convert power from outside and supply the converted power to the battery, and distribute and supply the power from the battery to each device connected to the power supply device. The battery includes an intermediate section that houses multiple battery cells and is disposed between the driver's seat and the front passenger seat so as to extend from a front end to a rear end of the passenger compartment, and a front section disposed forward of the intermediate section, the front section being filled with multiple battery cells. The drive unit has a single-axis structure in which the speed reducer and the drive shaft are disposed on a rotation axis of the motor, and is disposed between the front wheels. The front section is disposed rearward of the drive unit. The power supply device is disposed above the front section.

Other features and aspects will be apparent from the following detailed description, the drawings, and the claims.

### BRIEF DESCRIPTION OF THE DRAWINGS

Fig. 1 is a schematic diagram of an arrangement of a battery and devices around the battery when a battery electric vehicle according to an embodiment is viewed from above.
Fig. 2 is a schematic diagram of the battery electric vehicle shown in Fig. 1, illustrating the arrangement of the battery and the devices around the battery when the battery electric vehicle is viewed from the side.
Fig. 3 is a schematic diagram of a drive unit provided in the battery electric vehicle shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

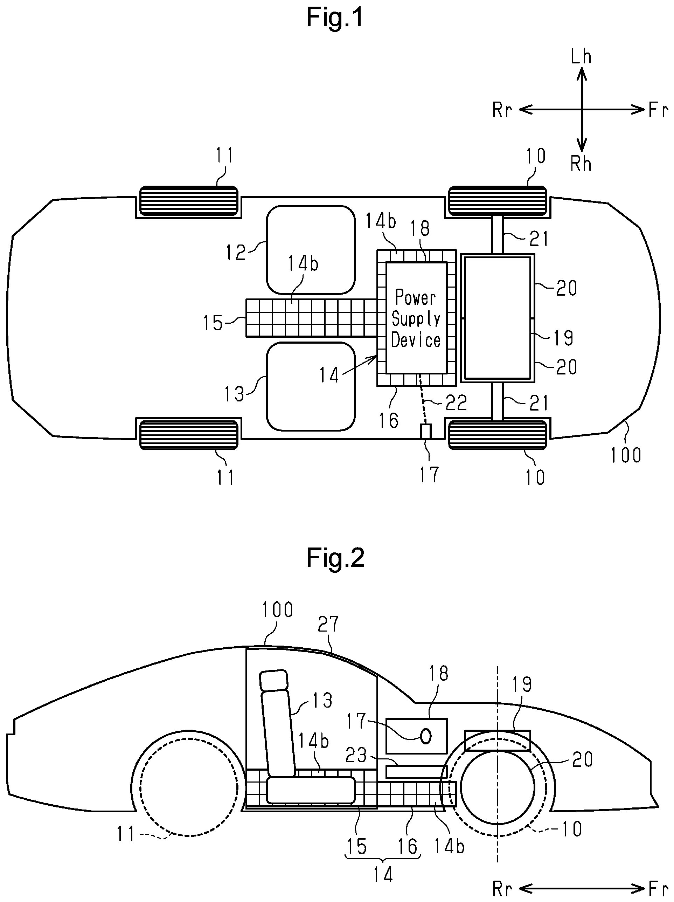

A battery electric vehicle 100 according to an embodiment will now be described with reference to Figs. 1 to 3.

In the following description, terms related to orientations or directions, such as "front", "rear", "upper", "lower", "right", and "left", are defined based on the battery electric vehicle 100.

In Figs. 1 and 2, "Fr" indicates the front direction of the battery electric vehicle 100. In Figs. 1 and 2, "Rr" indicates the rear direction of the battery electric vehicle 100. In Fig. 1, "Rh" indicates the right side as viewed from an occupant facing forward in the battery electric vehicle 100. In Fig. 1, "Lh" indicates the left side as viewed from an occupant facing forward in the battery electric vehicle 100.

Arrangement of a Battery 14 and an Electronic Control Unit 23 in the Battery Electric Vehicle 100

Fig. 1 shows an arrangement of the battery 14 and devices around the battery 14 when the battery electric vehicle 100 is viewed from above. Fig. 2 shows the arrangement of the battery 14 and the devices around the battery 14 when the battery electric vehicle 100 is viewed from the right side in Fig. 1.

As shown in Fig. 1, the battery electric vehicle 100 includes the battery 14. The battery 14 houses multiple battery cells 14b. The battery 14 stores electricity in the battery cells 14b.

The battery 14 includes an intermediate section 15 and a front section 16.

As shown in Figs. 1 and 2, the intermediate section 15 is disposed between a driver's seat 12 and a front passenger seat 13 so as to extend from a front end to a rear end of a passenger compartment 40. The intermediate section 15 houses a portion of the battery cells 14b.

As shown in Fig. 1, the front section 16 is disposed forward of the intermediate section 15. The front section 16 is filled with a portion of the battery cells 14b. The front section 16 houses a portion of the battery cells 14b.

As shown in Fig. 2, the electronic control unit 23 is disposed above the front section 16. The electronic control unit 23 controls the electricity stored in the battery 14. For example, the electronic control unit 23 controls current in accordance with measured values from a current sensor included in the battery 14. In addition, the electronic control unit 23 controls cooling, heating, and charging/discharging of the battery 14 based on measured values from a temperature sensor included in the battery 14.

Arrangement of a Power Supply Device 18 and a Charging Port 17 in the Battery Electric Vehicle 100

As shown in Figs. 1 and 2, the power supply device 18 is disposed above the front section 16. Like the electronic control unit 23, the power supply device 18 is disposed in a space above the front section 16.

As shown in Fig. 2, the power supply device 18 is disposed above the electronic control unit 23. Accordingly, the electronic control unit 23 is disposed above the front section 16 and below the power supply device 18.

Multiple devices included in the battery electric vehicle 100 are connected to the power supply device 18 through harnesses. For example, the power supply device 18 is connected to lighting systems, a monitor for a car navigation system, and other devices. The power supply device 18 distributes and supplies the power from the battery 14 to each device connected to the power supply device 18. The power supply device 18 may convert the power in the battery 14 and then supply the power to each device.

The power supply device 18 charges the battery 14 with power from the outside.

As shown in Fig. 1, the power supply device 18 is connected to the charging port 17 through a charging harness 22.

In Fig. 2, the long-dash double-short-dash line on the front wheel 10 represents the position of the center of the front wheel 10 in the vehicle front-rear direction. As shown in Fig. 2, the charging port 17 is disposed rearward of the long-dash double-short-dash line in Fig. 2. That is, the charging port 17 is disposed behind the right front wheel. As shown in Fig. 2, the charging port 17 is disposed at a position overlapping with the power supply device 18 in the height direction.

The charging port 17 is a connection port for supplying power from the outside to the power supply device 18. The charging harness 22 supplies the power supplied from the charging port 17 to the power supply device 18. The charging port 17 is supplied with AC electricity from the outside. For example, the charging port 17 is connected to a charging outlet installed in a residential setting for charging the battery electric vehicle 100. The AC electricity supplied from the charging outlet to the charging port 17 is supplied to the power supply device 18 through the charging harness 22.

The power supply device 18 converts the AC electricity supplied through the charging harness 22 into DC electricity. The power supply device 18 supplies the converted DC electricity to the battery 14. In this manner, the power supply device 18 converts the power from the outside and supplies the converted power to the battery 14.

Arrangement and Configuration of Drive Units 20 Included in the Battery Electric Vehicle 100

As shown in Figs. 1 and 2, the drive units 20 are disposed forward of the battery 14. The front section 16 of the battery 14 is disposed rearward of the drive units 20. As shown in Fig. 1, the drive units 20 are disposed between the left and right front wheels 10.

As shown in Fig. 1, one of the drive units 20 is disposed on each of left and right sides of the battery electric vehicle 100 in Fig. 1. In Fig. 1, the drive unit 20 disposed on the right side is connected to the right front wheel 10 through a drive shaft 21. In Fig. 1, the drive unit 20 disposed on the left side is connected to the left front wheel 10 through a drive shaft 21.

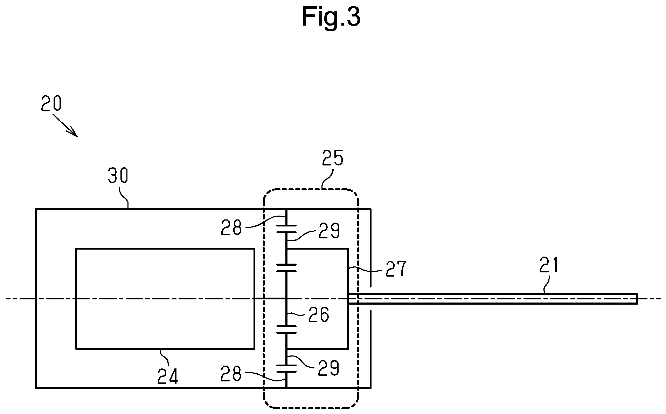

Fig. 3 shows a configuration of one of the drive units 20, included in the battery electric vehicle 100.

As shown in Fig. 3, the drive unit 20 includes a motor 24 and a speed reducer 25. In the drive unit 20, the motor 24 and the speed reducer 25 are surrounded by a housing 30.

As shown in Fig. 3, the speed reducer 25 includes a sun gear 26, a planetary carrier 27 rotatably supporting multiple pinions 29, and a ring gear 28. In other words, the speed reducer 25 includes a planetary gear mechanism.

As shown in Fig. 3, in the drive unit 20, the motor 24 is connected to the sun gear 26 of the speed reducer 25. In the speed reducer 25, the pinions 29 supported by the planetary carrier 27 are disposed between the sun gear 26 and the ring gear 28. The pinions 29 mesh with both the sun gear 26 and the ring gear 28. In the speed reducer 25, the ring gear 28 is fixed to the housing 30.

As shown in Fig. 3, the drive shaft 21 is connected to the planetary carrier 27. Accordingly, in the drive unit 20, rotation generated by the motor 24 is transmitted to the sun gear 26, the planetary carrier 27, and the drive shaft 21, in that order. At this time, since the sun gear 26, the pinions 29, and the ring gear 28 have different numbers of teeth, the rotation generated by the motor 24 is decelerated before being transmitted to the drive shaft 21. Thus, the speed reducer 25 reduces the speed of the rotation generated by the motor 24 and transmits the decelerated rotation to the drive shaft 21.

The long-dash short-dash line in Fig. 3 indicates a rotation axis of the motor 24. As shown in Fig. 3, in the drive unit 20, the speed reducer 25, and the drive shaft 21 are disposed on the rotation axis of the motor 24. In other words, the rotation axis of the motor 24, the rotation axis of the speed reducer 25, and the rotation axis of the drive shaft 21 are arranged on one straight line. Therefore, the drive unit 20 has a single-axis structure having a single rotation axis.

In the battery electric vehicle 100, the front wheels 10 are drive wheels. In Fig. 1, the drive unit 20 disposed on the right side rotates the right front wheel through the corresponding drive shaft 21. In Fig. 1, the drive unit 20 disposed on the left side rotates the left front wheel through the corresponding drive shaft 21.

Arrangement of a Power Control Unit 19 Included in the Battery Electric Vehicle 100

As shown in Figs. 1 and 2, a power control unit 19 is disposed above the drive units 20 and forward of the power supply device 18. The power control unit 19 controls the power supplied from the battery 14 to the drive units 20.

The battery 14 stores electricity converted into DC by the power supply device 18. The power control unit 19 is supplied with DC power from the battery 14. The power control unit 19 converts DC power supplied from the battery 14 into AC power. The power control unit 19 supplies the converted power to the drive units 20.

The drive units 20 supplied with power rotate the front wheels 10 through the drive shafts 21. In this manner, the battery electric vehicle 100 drives the front wheels 10, which are the drive wheels, by the electricity stored in the battery 14.

Each of the electronic control unit 23 and the power control unit 19 may be 1) processing circuitry including one or more processors that operate according to a computer program (software); 2) processing circuitry including one or more dedicated hardware circuits such as application specific integrated circuits (ASICs) that execute at least part of various processes, or 3) processing circuitry including a combination thereof. The processor includes a CPU and memory modules such as RAM and ROM. The memory modules store program code or commands configured to cause the CPU to execute processes. The memory modules, or computer-readable media, include any type of media that are accessible by general-purpose computers and dedicated computers.

### Operation of the Present Embodiment

In the battery 14 included in the battery electric vehicle 100, the battery cells 14b are housed not only in the intermediate section 15, which is positioned between the driver's seat 12 and the front passenger seat 13, but also in the front section 16, which is located forward of the driver's seat 12 and the front passenger seat 13. This configuration increases the capacity of the battery 14.

Each drive unit 20 of the battery electric vehicle 100 has a single-axis structure rather than a multi-axis structure. In the drive unit 20, having a single-axial structure, the motor 24 and the speed reducer 25 are arranged on the rotation axis of the motor 24. Therefore, although the drive unit 20 having a single-axis structure has a larger dimension in the vehicle width direction than a drive unit 20 having a multi-axis structure, the drive unit 20 having a single-axis structure has a compact dimension in the front-rear direction and the vertical direction. This configuration increases the space above the front section 16 of the battery electric vehicle 100 compared to a case in which each drive unit 20 has a multi-axis structure. In the above-described battery electric vehicle 100, the power supply device 18 is disposed in the space ensured by the compact design of the drive units 20. Consequently, the battery electric vehicle 100 achieves a vehicle proportion suitable for a sports car while ensuring sufficient capacity of the battery 14.

The power supply device 18 is connected to devices in the front portion of the battery electric vehicle 100, including the monitor of a car navigation system. Therefore, in the battery electric vehicle 100, by disposing the power supply device 18 forward of the driver's seat 12 and the front passenger seat 13, the harness routing length is reduced as compared with a case in which the power supply device 18 is disposed rearward of the driver's seat 12 and the front passenger seat 13.

### Advantages of the Present Embodiment

(1) The above-described battery electric vehicle 100 ensures a sufficient capacity of the battery 14 and reduces the harness routing length, while maintaining the proportion suitable for a sports car.
(2) The battery electric vehicle 100 includes the charging port 17, which is a connection port for supplying power from the outside to the power supply device 18. The charging port 17 is disposed at a position rearward of the front wheel 10 and overlapping with the power supply device 18 in the height direction.
   The power supply device 18 supplies power supplied from the outside to the battery 14 through the charging port 17. In the battery electric vehicle 100, the installed position of the charging port 17 is designed to reduce the distance between the charging port 17 and the power supply device 18. As a result, the battery electric vehicle 100 shortens the charging harness 22, which is a harness that connects the charging port 17 to the power supply device 18.
(3) The battery electric vehicle 100 includes the power control unit 19, which controls the power supplied from the battery 14 to the drive units 20. The power control unit 19 is disposed above the drive unit 20 and forward of the power supply device 18.
   Accordingly, the power supply device 18 in the battery electric vehicle 100 is positioned rearward of the front wheels 10. Since the charging port 17 is also located rearward of the front wheel 10, the distance between the power supply device 18 and the charging port 17 is reduced. As a result, the battery electric vehicle 100 shortens the charging harness 22, which is a harness that connects the charging port 17 to the power supply device 18.
(4) The battery electric vehicle 100 includes the electronic control unit 23, which controls the electricity stored in the battery 14. The electronic control unit 23 is disposed above the front section 16.
   In the battery electric vehicle 100, the space ensured by the compact design of the drive units 20 accommodates both the power supply device 18 and the electronic control unit 23. This configuration of the battery electric vehicle 100 allows the electronic control unit 23 to be located forward of the driver's seat 12 and the front passenger seat 13, while maintaining the proportion suitable for a sports car.
(5) The battery electric vehicle 100 includes the charging port 17, which is a connection port for supplying power from the outside to the power supply device 18. The charging port 17 is disposed at a position rearward of the front wheel 10 and overlapping with the power supply device 18 in the height direction. The electronic control unit 23 is disposed above the front section 16 and below the power supply device 18.

In the low-profile sports car-type battery electric vehicle 100, it is easier for a user of the battery electric vehicle 100 to supply power when the charging port 17 is positioned as high as possible. In the present embodiment, the charging port 17 is disposed at a position overlapping with the power supply device 18 in the height direction. Since the electronic control unit 23 is disposed below the power supply device 18, the power supply device 18 is disposed at a relatively high position. This configuration allows the battery electric vehicle 100 to achieve a layout that facilitates easy power supply for the user.

### Modifications

The present embodiment may be modified as described below. The present embodiment and the following modified examples can be combined as long as the combined modified examples remain technically consistent with each other.

In the battery electric vehicle 100, as shown in Fig. 1, the driver's seat 12 is disposed on the left side in Fig. 1, and the front passenger seat 13 is disposed on the right side in Fig. 1. The arrangement of the driver's seat 12 and the front passenger seat 13 may be reversed from that in Fig. 1.

In the battery electric vehicle 100 described above, the front wheels 10 are drive wheels. The battery electric vehicle 100 may also be a four-wheel-drive vehicle in which, in addition to the front wheels 10, the rear wheels 11 are also driven.

In the above-described battery electric vehicle 100, the charging port 17 is disposed at a position rearward of the front wheel 10 and overlapping with the power supply device 18 in the height direction. The position of the charging port 17, included in the battery electric vehicle 100, is not limited to the above-described embodiment. The charging port 17 may be provided forward of the front wheel 10. The charging port 17 may be located at a position not overlapping with the power supply device 18 in the height direction.

In the battery electric vehicle 100, AC electricity from the outside is supplied to the charging port 17. Alternatively, in addition to AC electricity, DC electricity from a rapid charging station, for example, may also be supplied to the charging port 17.

In the battery electric vehicle 100, the charging port 17 is disposed on the right side in Fig. 1. In the battery electric vehicle 100, the charging port 17 may be disposed on the left side in Fig. 1.

In the above-described battery electric vehicle 100, the power control unit 19 is disposed above the drive unit 20 and forward of the power supply device 18. The position of the power control unit 19, included in the battery electric vehicle 100, is not limited to the above-described embodiment. For example, the power control unit 19 may be disposed below the drive units 20. For example, the power control unit 19 may be disposed rearward of the power supply device 18.

In the battery electric vehicle 100 described above, the electronic control unit 23 is disposed above the front section 16 and below the power supply device 18. The position of the electronic control unit 23, included in the battery electric vehicle 100, is not limited to the above-described embodiment. For example, the electronic control unit 23 may be disposed below the front section 16. For example, the electronic control unit 23 may be disposed above the power supply device 18.

The battery electric vehicle 100 described above includes two drive units 20, that is, the drive unit 20 connected to the right front wheel and the drive unit 20 connected to the left front wheel. The configuration of the drive units 20 included in the battery electric vehicle 100 is not limited to the above-described embodiment.

For example, the battery electric vehicle 100 may include a single drive unit 20 connected to both the right front wheel and the left front wheel, instead of including two drive units 20. Hereinafter, the battery electric vehicle 100 including such a single drive unit 20 will be referred to as a battery electric vehicle 100 of a first modification.

For example, the battery electric vehicle 100 may include a single drive shaft 21 that extends along the rotation axes of the motors 24 respectively included in the two right and left drive units 20. Hereinafter, the battery electric vehicle 100 including such drive units 20 will be referred to as a battery electric vehicle 100 of a second modification.

The configuration of each drive unit 20 included in the battery electric vehicle 100 is not limited to the that shown in Fig. 3. For example, the drive units 20 included in the battery electric vehicles 100 of the first modification and the second modification may each include a differential gear in addition to the motor 24 and the speed reducer 25.

As shown in Fig. 2, in the battery electric vehicle 100 described above, the upper end of the front section 16 is positioned lower than the upper end of the intermediate section 15. The position of the front section 16, included in the battery electric vehicle 100, is not limited to the above-described embodiment. For example, the upper end of the front section 16 may instead be positioned at the same height as the upper end of the intermediate section 15. Alternatively, the upper end of the front section 16 may be positioned higher than the upper end of the intermediate section 15.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A battery electric vehicle (100), comprising:
a battery (14);
left and right front wheels (10) configured to be driven by electricity stored in the battery (14);
a passenger compartment (27);
a driver's seat (12) and a front passenger seat (13) installed in the passenger compartment (27);
a drive unit (20) including a motor (24) and a speed reducer (25) configured to transmit rotation generated by the motor (24) to a drive shaft (21); and
a power supply device (18), wherein
the power supply device (18) is configured to
convert power from outside and supply the converted power to the battery (14), and
distribute and supply the power from the battery (14) to each device connected to the power supply device (18),
the battery (14) includes:
an intermediate section (15) that houses multiple battery cells (14b) and is disposed between the driver's seat (12) and the front passenger seat (13) so as to extend from a front end to a rear end of the passenger compartment (27); and
a front section (16) disposed forward of the intermediate section (15), the front section (16) being filled with multiple battery cells (14b),
the drive unit (20) has a single-axis structure in which the speed reducer (25) and the drive shaft (21) are disposed on a rotation axis of the motor (24), and is disposed between the front wheels (10),
the front section (16) is disposed rearward of the drive unit (20), and
the power supply device (18) is disposed above the front section (16).

2. The battery electric vehicle (100) according to claim 1, further comprising a charging port (17) that is a connection port for supplying the power to the power supply device (18) from the outside,
wherein the charging port (17) is disposed at a position rearward of the front wheels (10) and overlapping with the power supply device (17) in a height direction.

3. The battery electric vehicle (100) according to claim 2, further comprising a power control unit (19) including processing circuitry configured to control the power supplied from the battery (14) to the drive unit (20),
wherein the power control unit (19) is disposed above the drive unit (20) and forward of the power supply device (18).

4. The battery electric vehicle (100) according to any one of claims 1 to 3, further comprising an electronic control unit (23) including processing circuitry configured to control the electricity stored in the battery (14),
wherein the electronic control unit (23) is disposed above the front section (16).

5. The battery electric vehicle (100) according to claim 4, further comprising a charging port (17) that is a connection port for supplying the power to the power supply device (18) from the outside, wherein
the charging port (17) is disposed at a position rearward of the front wheels (10) and overlapping with the power supply device (18) in a height direction, and
the electronic control unit (23) is disposed above the front section (16) and below the power supply device (18).
